# EUROPÄISCHE PATENTSCHRIFT

(11) **EP 3 307 022 B1**
(45) Veröffentlichungstag und Bekanntmachung des Hinweises auf die Patenterteilung: **28.04.2021**
(21) Anmeldenummer: 17189776.2
(22) Anmeldetag: 07.09.2017
(51) Int. Cl.: H05B 45/14, H05B 45/385

(54) **GETAKTETE SPERRWANDLERSCHALTUNG**
CLOCKED FLYBACK CONVERTER CIRCUIT
CIRCUIT CONVERTISSEUR FLYBACK CADENCÉ

(30) Priorität: 27.09.2016 DE 102016218552
(43) Veröffentlichungstag der Anmeldung: 11.04.2018
(73) Patentinhaber: Tridonic GmbH & Co KG, 6851 Dornbirn (AT)
(72) Erfinder: de Clercq, Ludwig, 6900 Bregenz (AT)
(74) Vertreter: Beder, Jens

(56) Entgegenhaltungen:
- US-A1- 2012 286 686
- US-A1- 2013 093 356

## Beschreibung

Die vorliegende Erfindung betrifft eine getaktete Sperrwandlerschaltung und ein Verfahren zum Steuern einer getakteten Sperrwandlerschaltung. Die Erfindung betrifft insbesondere einen getakteten Sperrwandler zum direkten Betreiben einer oder mehrerer Leuchtdioden.

Ein Sperrwandler, auch Hoch-Tiefsetzsteller (englisch "flyback converter") genannt, ist ein eingangsseitig getakteter Gleichspannungswandler, der elektrische Energie zwischen einer Eingangs- und einer Ausgangsseite mittels eines Transformators galvanisch entkoppelt (also potentialgetrennt) überträgt. Mit einem Sperrwandler kann eine am Eingang zugeführte Gleichspannung mit geringem schaltungstechnischen Aufwand in eine Gleichspannung mit einem anderen Spannungsniveau umgewandelt werden.

Aus der US 2012/286686 A1 ist eine getaktete Sperrwandlerschaltung bekannt, bei der eine Steuereinrichtung einen die Primärspule des Transformators an Masse ankoppelnden Schalter zur Taktung des Sperrwandlers selektiv mit einer bestimmten Frequenz und Einschaltdauer ein- und wieder ausschaltet. Die US 2012/286686 A1 schlägt vor, eine solche getaktete Sperrwandlerschaltung zur direkten Speisung von Leuchtdioden (LEDs) zu nutzen, wobei der durch den steuerbaren Schalter fließende Strom erfasst und der Schalter ausgeschaltet wird, sobald der erfasste Strom einen entsprechend einem Dimm-Signal gesetzten Schwellenwert für den maximalen Schalterstrom erreicht.

Dies hat den Nachteil, dass insbesondere bei kleinen Dimm-Pegeln und damit einem niedrigen Schwellenwert unmittelbar beim Einschalten des Schalters auftretende Stromspitzen ein ungewolltes Ausschalten des Schalters auslösen können. Um dem entgegenzuwirken kann ein Minimal-Schwellenwert oberhalb zu erwartender Stromspitzen gesetzt werden, was jedoch die Steuerung des Dimm-Pegels über das Variieren des Schwellenwerts im unteren Dimm-Bereich einschränkt.

Zudem müssen für eine Bestimmung der in einem Schaltzyklus an die LED(s) abgegebenen Leistung die die Einschalt-Zeitdauer und die Ausschalt-Zeitdauer definierenden Zeitpunkte technisch aufwendig mittels Komparatoren ermittelt werden.

Eine getaktete Sperrwandlerschaltung zum Betreiben mehrerer Leuchtmittel gemäß dem Oberbegriff des beigefügten Anspruches 1 ist in der US 2013/0093356 A1 beschrieben.

Der Erfindung liegt die Aufgabe zugrunde, eine getaktete Sperrwandlerschaltung für den direkten Betrieb von einem oder mehreren Leuchtmitteln, insbesondere LED(s), und ein Verfahren zum Steuern einer Sperrwandlerschaltung bereitzustellen, die eine genaue Steuerung und Regelung über einen großen Lastbereich mit einem einfachen und kostengünstigen Aufbau erlauben.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist eine getaktete Sperrwandlerschaltung zum Betreiben einer oder mehrerer Leuchtmittel einen steuerbaren Schalter, einen Transformator mit einer Primärwicklung, welche mit dem steuerbaren Schalter gekoppelt ist, und einer Sekundärwicklung, an welche das Leuchtmittel ankoppelbar ist, eine Steuereinrichtung zum Ansteuern des steuerbaren Schalters und Mittel zum Erfassen eines zeitlichen Mittelwerts des durch den Schalter fließenden Stroms und zur Zufuhrung eines diesen Mittelwert wiedergebenden Signals an die Steuereinrichtung auf, wobei die Steuereinrichtung dazu ausgelegt ist, jeweils den Zeitpunkt des Aus- und

Wiedereinschaltens des Schalters auf Grundlage des Signals zu bestimmen. Mit dem Setzen des Ausschalt-Zeitpunkts und des Wiedereinschalt-Zeitpunkts wird die Einschalt-Zeitdauer bzw. die Ausschalt-Zeitdauer bestimmt und damit die von der Sperrwandlerschaltung abgegebene Leistung, welche proportional zu dem zeitlichen Mittelwert ist. Der zeitliche Mittelwert kann während eines Schaltzyklus kontinuierlich gebildet und ausgewertet werden oder nur für bestimmte Abschnitte des Schaltzyklus.

Um die von der Sperrwandlerschaltung abgegebene Leistung genau zu bestimmen, wird zusätzlich zum Strom auch die von der Sekundärwicklung bzw. der Sperrwandlerschaltung abgegebene Spannung ermittelt. Hierzu weist der Transformator eine primärseitige Hilfswicklung auf, welche eine effektive Spannung proportional zu der von der Sekundärwicklung abgegebenen effektiven Spannung abgibt und an der die Steuereinrichtung zum Erfassen dieser Spannung angekoppelt ist. Die Steuereinrichtung ist dazu ausgelegt, die an das Leuchtmittel abgegebene Spannung aus der von der Hilfswicklung erfassten Spannung abzuleiten, den durch das Leuchtmittel fließenden Strom I_{LED} gemäß der Formel I_{LED} = (Uᵢₙ·Iᵢₙ-Pₗₒₛₛ)/U_{LED} zu ermitteln und den Zeitpunkt des Aus- und Wiedereinschaltens des Schalters auf Grundlage einer Abweichung des ermittelten Stroms I_{LED} von einem vorgegebenen Wert zu bestimmen. Dabei ist Uᵢₙ die an der Primärwicklung anliegende Spannung, Iᵢₙ der zeitliche Mittelwert des durch die Primärwicklung fließenden und von dem Signal angezeigten Stroms und Pioss die Verlustleistung der Sperrwandlerschaltung.

Die Verlustleistung Pₗₒₛₛ erlaubt bei der Regelung die auf der sekundären Seite abgebende Leistung auch mit den lediglich primärseitig erfassten Strömen und Spannungen sehr genau zu bestimmt und kann vom Hersteller berechnet oder experimentell ermittelt und in der Steuereinrichtung z.B. in einer Tabelle gespeichert werden.

Die Verlustleistung Pₗₒₛₛ kann bei verschiedenen Lasten oder unterschiedlichen Betriebszuständen unterschiedlich sein. Um dies zu berücksichtigen können für verschiedene mögliche Lasten/Betriebszustände jeweils die entsprechende Verlustleistung Pₗₒₛₛ ermittelt und gespeichert werden. Gemäß der vorliegenden Erfindung ist die Steuereinrichtung dazu ausgelegt zumindest einen Betriebszustand der Sperrwandlerschaltung zu detektieren, eine in der Steuereinrichtung gespeicherte diesem Betriebszustand zugeordnete Verlustleistung Pₗₒₛₛ zu ermitteln und den Strom I_{LED} auf Grundlage der ermittelten Verlustleistung Pₗₒₛₛ zu bestimmen.

Die Steuereinrichtung kann dazu ausgelegt sein, den vorgegebenen Wert auf Grundlage eines empfangenen Dimmsignals zu setzen bzw. zu ändern.

Der Ausschaltzeitpunkt kann auch mittelbar durch Bestimmen einer Einschaltzeitdauer relativ zum Einschaltzeitpunkt festgelegt werden.

Nach dem Einschalten des Schalters auftretende kurze Stromspitzen werden zwar bei der Mittelwertbildung mit erfasst, haben wegen ihrer zeitlichen Kürze jedoch nur einen geringen Einfluss auf den Mittelwert, so dass ein ungewolltes Ausschalten des Schalters z.B. auch bei niedrigen Dimmpegeln verhindert werden kann.

Für eine Regelung der von der Sperrwandlerschaltung abgegebenen Leistung bzw. des von der Sperrwandlerschaltung abgegebenen Stroms kann die Steuereinrichtung dazu ausgelegt sein, den Zeitpunkt des Aus- und Wiedereinschaltens des Schalters auf Grundlage einer Abweichung des erfassten Mittelwerts von einem vorgegebenen Wert zu bestimmen. Je nach Höhe der bestimmten Abweichung kann der Zeitpunkt des Ausschaltens mehr oder weniger verzögert bzw. der Zeitpunkt des Wiedereinschaltens vorgezogen werden, um beispielsweise eine zu niedrige Abgabeleistung zu korrigieren.

Für die Bildung des zeitlichen Mittelwerts können an sich bekannte Verfahren eingesetzt werden. Das Mittel zum Erfassen des zeitlichen Mittelwerts kann einen Tiefpass beispielsweise einen Kondensator aufweisen, der von dem durch den Schalter fließenden Strom geladen wird, wobei das Signal eine von dem Kondensator abgegebene Spannung Uc ist.

Zusätzlich kann ein Faktor, der die bei der Signalerzeugung entstehenden Abweichungen des Signals von dem tatsächlich durch die Primärwicklung fließenden mittleren Strom Iᵢₙ wiedergibt bzw. ausgleicht, berechnet oder experimentell ermittelt werden. Die Steuereinrichtung kann dazu ausgelegt sein, den Strom Iᵢₙ aus der von dem Kondensator abgegebenen Spannung U_{c} mittels diesem vorgegebenen, die Relation zwischen dem Strom Iᵢₙ und der Spannung U_{c} anzeigenden Faktor α zu ermitteln.

Das Mittel zum Erfassen des zeitlichen Mittelwerts kann ein Tiefpassfilter sein und die Leuchtmittel Leuchtdioden.

Die Sperrwandlerschaltung kann eine potentialgetrennte Sperrwandlerschaltung sein, bei der es keine elektrisch leitende Verbindung zwischen der Primär- und der Sekundärseite gibt.

Gemäß der vorliegenden Erfindung weist ein Betriebsgerät für Leuchtdioden eine der oben beschriebenen Sperrwandlerschaltungen auf.

Gemäß der vorliegenden Erfindung weist ein Verfahren zum Steuern einer einen Transformator aufweisenden getakteten Sperrwandlerschaltung, bei der eine Primärwicklung des Transformators mit einem steuerbaren Schalter und eine Sekundärwicklung des Transformators mit einem oder mehreren Leuchtmitteln gekoppelt ist, die Schritte auf:
- Ansteuern des steuerbaren Schalters,
- Erfassen eines zeitlichen Mittelwerts Iin des durch den Schalter fließenden Stroms,
- Erfassen einer von einer primärseitigen Hilfswicklung des Transformators abgegebenen Spannung,
- Ableiten der an das Leuchtmittel abgegebenen Spannung U_{LED} aus der von der Hilfswicklung erfassten Spannung,
- Detektieren von zumindest einem Betriebszustand der Sperrwandlerschaltung (3),
- Ermitteln einer gespeicherten diesem Betriebszustand zugeordneten Verlustleistung Pₗₒₛₛ der Sperrwandlerschaltung,
- Ermitteln des durch das Leuchtmittel fließenden Stroms I_{LED} auf Grundlage der ermittelten Verlustleistung Pₗₒₛₛ gemäß der Formel I_{LED} = (Uᵢₙ·Iᵢₙ-Pₗₒₛₛ)/U_{LED}, wobei Uᵢₙ die an der Primärwicklung anliegende Spannung ist, Iᵢₙ der zeitliche Mittelwert des durch die Primärwicklung fließenden und von dem Signal angezeigten Stroms ist, und Pₗₒₛₛ die Verlustleistung der Sperrwandlerschaltung ist, und
- jeweiliges Bestimmen eines Zeitpunkts für das Aus- und Wiedereinschalten des Schalters auf Grundlage einer Abweichung des ermittelten Stroms I_{LED} von einem vorgegebenen Wert.

Die getaktete Sperrwandlerschaltung kann gemäß der vorliegenden Erfindung beispielsweise in einem kontinuierlichem Betriebsmodus, einem diskontinuierlichem Betriebsmodus und / oder einem Grenzbetriebsmodus zwischen kontinuierlichem und diskontinuierlichem Betrieb betrieben werden. Es können auch in einem Zeitmultiplex unterschiedliche Betriebsmodi der oben genannten Arten vermischt werden.

Nachfolgend wird die Erfindung anhand der beiliegenden Zeichnungen näher erläutert. Es zeigen:
Fig. 1 eine getaktete Sperrwandlerschaltung nach einem ersten Ausführungsbeispiel gemäß der vorliegenden Erfindung,
Fig. 2 ein Diagramm mit Signalverläufen der im Grenzbetriebsmodus betriebenen Sperrwandlerschaltung nach einem Ausführungsbeispiel gemäß der vorliegenden Erfindung,
Fig. 3 ein Diagramm mit Signalverläufen der im diskontinuierlichen Betriebsmodus betriebenen Sperrwandlerschaltung nach einem Ausführungsbeispiel gemäß der vorliegenden Erfindung,
Fig. 4 eine getaktete Sperrwandlerschaltung nach einem zweiten Ausführungsbeispiel gemäß der vorliegenden Erfindung, und
Fig. 5 ein Betriebsgerät für Leuchtdioden nach einem Ausführungsbeispiel gemäß der vorliegenden Erfindung.

Komponenten mit gleichen Funktionen sind in den Figuren mit gleichen Bezugszeichen gekennzeichnet.

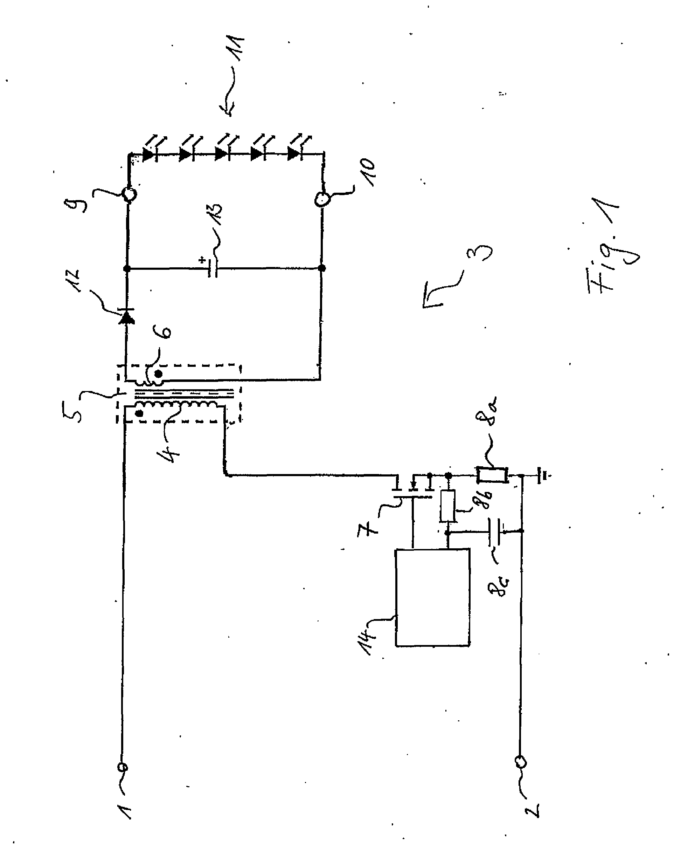

Fig. 1 zeigt eine vereinfachte Schaltung eines getakteten Sperrwandlers zum direkten Betrieb von mehreren Leuchtmitteln nach einem ersten Ausführungsbeispiel gemäß der vorliegenden Erfindung. An den zwei Eingangsanschlüssen 1, 2 der abgebildeten Sperrwandlerschaltung 3 wird eine Versorgungsspannung zugeführt, die eine Gleichspannung oder eine gleichgerichtete Wechselspannung sein kann.

Die Primärwicklung 4 des Transformators 5, der steuerbare Schalter 7 und ein niederohmiger Strommesswiderstand 8a sind in Reihe zwischen dem ersten Eingangsanschluss 1 und dem zweiten Eingangsanschluss 2 geschaltet. Die über dem Strommesswiderstand 8a (niederohmiger Widerstand) abfallende Spannung wird einem aus einem Widerstand 8b und einem Kondensator 8c bestehenden Tiefpassfilter zugeführt, wobei der Widerstand 8b an dem Strommesswiderstand 8a und der Kondensator 8c an Masse angeschlossen ist.

Der zweite Eingangsanschluss 2 ist mit Masse verbunden. An den zwei Ausgangsanschlüssen 9, 10 der Sperrwandlerschaltung 3 ist eine aus einer Reihenschaltung von im Beispiel fünf LEDs gebildete LED-Strecke 11 angeschlossen. Die Sekundärwicklung 6 des Transformators 5 und eine Diode 12 sind in Reihe zwischen dem ersten Ausgangsanschluss 9 und dem zweiten Ausgangsanschluss 10 geschaltet. Ein Kondensator 13 ist an den Ausgangsanschlüssen 9, 10 parallel angekoppelt. Die Primär- und Sekundärwicklung 4, 6 des Transformators 5 weisen eine unterschiedliche Polarität/Wicklungsrichtung auf.

Der steuerbare Schalter 7 kann ein Leistungsschalter, ein Feldeffekttransistor oder ein Bipolartransistor sein. Der steuerbare Schalter 7 kann ein Transistor mit isolierter Gateelektrode sein.

Eine mit dem Schalter 7 verbundene Steuereinrichtung 14 steuert den Schalter 7 an, um diesen ein- und auszuschalten. Der Steuereinrichtung 14 wird die an dem Kondensator 8c anliegende Spannung als ein den zeitlichen Mittelwert des durch den Schalter 7 fließenden Stroms wiedergebendes Signal, zugeführt.

Die Steuereinrichtung 14 kann eine integrierte Halbleiterschaltung sein oder eine integrierte Halbleiterschaltung umfassen. Die Steuereinrichtung 14 kann als ein Prozessor, ein Mikroprozessor, ein Controller, ein Mikrocontroller oder eine anwendungsspezifische Spezialschaltung (ASIC, "Application Specific Integrated Circuit") oder eine Kombination der genannten Einheiten ausgestaltet sein. Dies ist insbesondere möglich, da die Mittelwertbildung anders als bei cycle-to-cycle-Steuerungen mehrere Schalterzyklen betrachtet werden.

Bei dem getakteten Sperrwandler 3 wird elektrische Energie zwischen den mittels des Transformators 5 galvanisch getrennten Eingangsanschlüssen 1, 2 und den Ausgangsanschlüssen 9, 10 übertragen. Hierzu schaltet die Steuereinrichtung 14 den Schalter 7 hochfrequent wiederholt ein und wieder aus. Nach dem Einschalten wird die Primärwicklung 4 des Transformators 5 von Strom durchflossen, die Diode 12 unterdrückt einen Stromfluss auf der Sekundärseite. Nach dem Ausschalten (Sperrphase) wird die in der Primärwicklung 4 gespeicherte Energie über die Sekundärwicklung 6 des Transformators 5 abgegeben bzw. erzwingt einen Stromfluss auf der Sekundärseite durch die Diode 12. Der Kondensator 13 wird geladen, die an den Ausgangsanschlüssen 9, 10 der Sperrwandlerschaltung 1 angeschlossene LED-Strecke 11 leuchtet. Der Stromfluss auf der Sekundärseite nimmt linear ab und wird im diskontinuierlichen (lückenden) Betrieb sowie im Grenzbetrieb schließlich null bevor die Steuereinrichtung 14 den Schalter 7 wieder einschaltet.

Gemäß der vorliegenden Erfindung erfolgt eine Regelung der Abgabeleistung bzw. der Helligkeit durch ein Variieren der Aus- und/oder Wiedereinschaltzeiten auf Grundlage des erfassten Mittelwerts des primärseitigen Stroms durch den Schalter 7 als Maß für den die LED durchfließenden, sekundärseitigen Strom. Die Steuereinrichtung 14 beginnt die Regelung mit vorgegebenen Aus- und Wiedereinschaltzeiten, erfasst dabei die über den Kondensator 8c abfallende Spannung, welche ein Maß für den Mittelwert ist, bestimmt eine Abweichung des Mittelwerts von einem vorgegeben, einer bestimmten Abgabeleistung entsprechenden Mittelwert und variiert die Aus- und/oder Wiedereinschaltzeit entsprechend der Höhe der bestimmten Abweichung. Eine längere Einschaltdauer und eine kürzere Ausschaltdauer führen jeweils zu einer höheren Abgabeleistung.

Der Sperrwandler 3 kann im lückenden oder nichtlückenden Betrieb arbeiten. Hierzu kann es nötig sein, weitere Messgrößen zu erfassen, um zum Beispiel den Zeitpunkt des Nulldurchgangs des Stromes durch den Schalter 7 zu bestimmen.

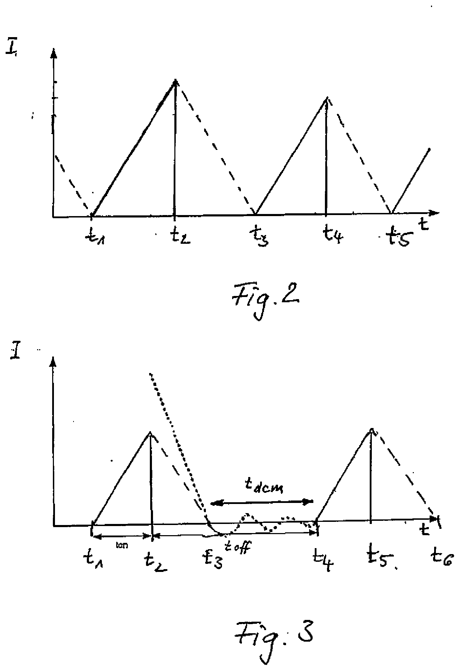

Fig. 2 zeigt in einer vereinfachten Darstellung die zeitlichen Verläufe des Stromes durch die Primärwicklung 4 und den Schalter 7 (durchgezogene Linie) und des Stromes durch die Sekundärwicklung 6 (gestrichelte Linie) des im Grenzbetriebsmodus betriebenen Sperrwandlers 3. Wie in dem Diagramm der Fig. 2 zu sehen, schaltet die Steuereinrichtung 14 den Schalter 7 zum Zeitpunkt t₁ ein. Der mittlere Stromfluss durch den Schalter 7 wird mittels dem an dem Messwiderstand 8 angekoppelten Tiefpassfilter 8b,.8c von der Steuereinrichtung 14 erfasst.

Nach dem Einschalten zum Zeitpunkt t₁ steigt der Strom durch die Primärwicklung 4 und den Schalter 7 (durchgezogenen Linie) linear an. Zum vorgegebenen Zeitpunkt t₂ schaltet die Steuereinrichtung 14 den Schalter 7 aus. Der Stromfluss durch die Sekundärwicklung 6 (gestrichelte Linie) beginnt und sinkt zum Zeitpunkt t₃ auf null ab, worauf die Steuereinrichtung 14 den Schalter 7 wieder einschaltet (Grenzbetrieb). Ein Wiedereinschalten kann auch erst bei einer positiven Flanke (Nulldurchgang) des Spulenstroms erfolgen.

Die Steuereinrichtung 14 ermittelt für die Zeitspanne t₁ bis t₂ (t_{ON}) oder t₁ bis t₃ (tₒₙ + t_{OFF})den mittleren Stromfluss und vergleicht diesen mit einem Schwellenwert. Die Mittelwertbildung kann auch mehrere Zyklen dauern. Es ist jedoch auch möglich, den mittleren Stromfluss während anderer Zeitspannen und insbesondere kontinuierlich zu ermitteln und mit einem Schwellenwert zu vergleichen.

Wird von der Steuereinrichtung 14 eine zu hohe Leistungsabgabe ermittelt und die Einschaltzeitspanne t_{ON} für folgende Zyklen t₅ verkürzt, was zu einem geringeren mittleren Stromfluss und einer geringeren Leistungsabgabe führt.

Fig. 3 zeigt in einem Diagramm die zeitlichen Verläufe des Stromes durch die Primärwicklung 4 und den Schalter 7 (durchgezogene Linie) und des Stromes durch die Sekundärwicklung 6 (gestrichelte Linie) des im diskontinuierlichen Betriebsmodus betriebenen Sperrwandlers 3. Wie in Fig. 3 gezeigt schaltet die Steuereinrichtung 14 den Schalter 7 zum Zeitpunkt t₁ ein, zum Zeitpunkt t₂ ab und nach einer Zeitspanne t_{off}=t₄-t₂ zum Zeitpunkt t₄ wieder ein.

In dem diskontinuierlichen Betriebsmodus wird der Schalter 7 immer beim Erreichen der vorgegebenen Einschaltdauer tₒₙ=t₂-t₁=t₅-t₄ ausgeschaltet, eine Erhöhung der Abgabeleistung erfolgt mit einer entsprechenden Verringerung der Zeitdauer t_{dcm}=t₄-t₃ und ein Absenken der Abgabeleistung mit einer entsprechenden Erhöhung der Zeitdauer t_{dcm}=t₄-t₃.

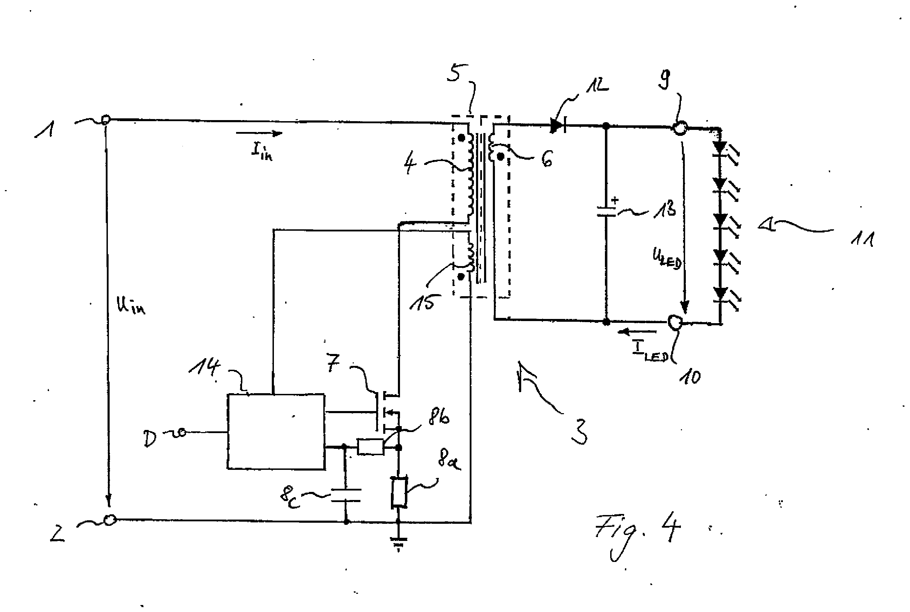

Fig. 4 zeigt eine getaktete Sperrwandlerschaltung nach einem zweiten Ausführungsbeispiel gemäß der vorliegenden Erfindung, bei der für eine genauere Bestimmung der Abgabeleistung zusätzlich zum mittleren Strom durch die Primärwicklung 4 auch die von der Sperrwandlerschaltung 3 abgegebene mittlere Spannung U_{LED} ermittelt wird. Hierzu weist der Transformator 5 eine primärseitige Hilfswicklung 15 zum Erfassen der von der Sekundärwicklung abgegebenen Spannung auf, welche mit dem zweiten Eingangsanschluss 2 und der Steuereinrichtung 15 verbunden ist.

Der durch das Leuchtmittel 11 fließende Strom I_{LED} kann gemäß der Formel I_{LED}=(Pᵢₙ-Pₗₒₛₛ)/U_{LED} bzw.

I_{LED}=(Uᵢₙ·Iᵢₙ-Pₗₒₛₛ)/U_{LED} berechnet werden. Dabei ist Uᵢₙ die Eingangsspannung der Sperrwandlerschaltung 3, welche in der Steuereinrichtung 14 gespeichert oder von ihr ermittelt werden kann, Iᵢₙ der von der Sperrwandlerschaltung 3 aufgenommene und mittels dem Tiefpassfilter erfasste Strom, und Pₗₒₛₛ die Verlustleistung der Sperrwandlerschaltung, welche vom Anwender/Hersteller berechnet oder experimentell ermittelt wurde und in der Steuereinrichtung 14 gespeichert ist.

Zusätzlich kann ein Faktor a, der die bei der Signalerzeugung entstehenden Abweichungen des Signals von dem tatsächlich durch die Primärwicklung fließenden Strom Iᵢₙ wiedergibt bzw. ausgleicht, berechnet oder experimentell ermittelt werden. Der Faktor α kann in der Steuereinrichtung 14 gespeichert werden, welche den Strom I_{LED} dann gemäß der Formel L_{LED}=(α·Uᵢₙ·Iᵢₙ-Pₗₒₛₛ)/U_{LED} berechnet.

Die Steuereinrichtung 14 empfängt ein Dimmsignal D zur Helligkeitssteuerung des Leuchtmittels 11 (LED-Strecke) und leitet daraus den Sollwert für den mittleren Strom durch die Primärwicklung 4 und den Schalter 7 ab. Für eine Regelung der Helligkeit (Abgabeleistung) auf die von dem Dimmsignal D angezeigte (vorgegebenen) Helligkeit:
- leitet die Steuereinrichtung 14 die an dem Leuchtmittel anliegende Spannung U_{LED} aus der von der Hilfswicklung 15 erfassten Spannung ab,
- ermittelt den durch das Leuchtmittel 11 fließenden Strom I_{LED} gemäß der angegebenen Formel,
- bestimmt die Abweichung des ermittelten Stroms I_{LED} vom Sollwert, und
- setzt den Zeitpunkt des Aus- und/oder Wiedereinschaltens des Schalters 7 auf Grundlage der bestimmten Abweichung.

In dem diskontinuierlichen Betrieb können nach dem Ausschalten des Schalters 7 Oszillationen der Spannung über der primärseitigen Spule 4 aufgrund von parasitären Effekten auftreten. Um Schaltverluste des Schalters 7 zu vermeiden, sollten solche Oszillationen beim Wählen des Wiedereinschaltzeitpunktes berücksichtigt werden bzw. der Wiedereinschaltzeitpunkt so gewählt werden, dass zum Wiedereinschaltzeitpunkt die Spannungsschwingung auf einen Nulldurchgang nach einem Spannungsminimum fällt. Der von der Hilfswicklung 15 erfasste Spannungsverlauf kann zum Ermitteln dieses Nulldurchgangs genutzt werden.

Die Steuereinrichtung 14 ermittelt hierzu in dem diskontinuierlichen Betrieb mittels des von der Hilfswicklung 15 erzeugten Spannungssignals den Zeitpunkt an dem der Spannungsverlauf einen Nulldurchgang nach einem Minimum aufweist, um den Schalter zu diesem Zeitpunkt wiedereinzuschalten.

In dem in Fig. 3 gezeigten Diagramm ist die Oszillation des Spannungssignals nach dem Ausschalten als gepunktete Linie gezeigt. Soll das Wiedereinschalten des Schalters 7 unter Berücksichtigung der erfassten Oszillation erfolgen, bedeutet dies jedoch, dass das Wiedereinschalten des Schalters 5 nicht zu einem beliebigen Zeitpunkt erfolgen kann, sondern nur in diskreten Zeitabständen, nämlich immer dann, wenn die Spannungsschwingung einen Nulldurchgang hat.

Wird der Schalter 7 auf Grund dieser Spannungsschwingungen und dem sich daraus ergebenden Wiedereinschaltzeitpunkt beim Nulldurchgang nicht genau zu dem von der Steuereinrichtung 14 gemäß der Lastanforderung/Abweichung ermittelten Zeitpunkt wiedereingeschaltet, kann die vorgegebene Leistung, der vorgegebene zeitliche Mittelwert des sekundärseitig abgegebenen Stroms I_{LED}, für diesen Wiedereinschaltzyklus nicht exakt erreicht werden und fällt, wenn zum Beispiel erst zu einem nächstmöglichen diskreten Zeitpunkt später wiedereingeschaltet wird, niedriger aus. Mit der vorliegenden Erfindung wird eine solche Abweichung durch die Regelung erfasst und korrigiert.

Gemäß einer Ausführung der vorliegenden Erfindung kann ein Wechsel zwischen einem Grenzbetriebsmodus, einem kontinuierlichem Betriebsmodus, und / oder diskontinuierlichem Betriebsmodus in Abhängigkeit des gesetzten Sollwerts für den mittleren Strom erfolgen. Insbesondere kann bei einem Unterschreiten eines bestimmten Sollwerts vom kontinuierlichen zum diskontinuierlichen Betriebsmodus gewechselt und beim Überschreiten wieder vom diskontinuierlichen zum kontinuierlichen Betriebsmodus gewechselt werden. Beispielsweise kann bei einem Unterschreiten eines bestimmten Sollwerts vom Grenzbetriebsmodus zum diskontinuierlichen Betriebsmodus gewechselt und beim Überschreiten wieder vom diskontinuierlichen Betriebsmodus zum Grenzbetriebsmodus gewechselt werden. Mit dieser Maßnahme können Probleme bei der Erfassung sehr kleiner mittlerer Ströme vermieden werden, indem ab einem Sollwert, bei dem der mittlere Strom für die Zeitspanne t₁ bis t₂ oder t₁ bis t₃ gerade noch erfasst werden kann, vom kontinuierlichen oder auch vom Grenzbetriebsmodus zum diskontinuierlichen Betriebsmodus mit konstanter Zeitspanne t₁ bis t₂ bzw. t₁ bis t₃ gewechselt wird.

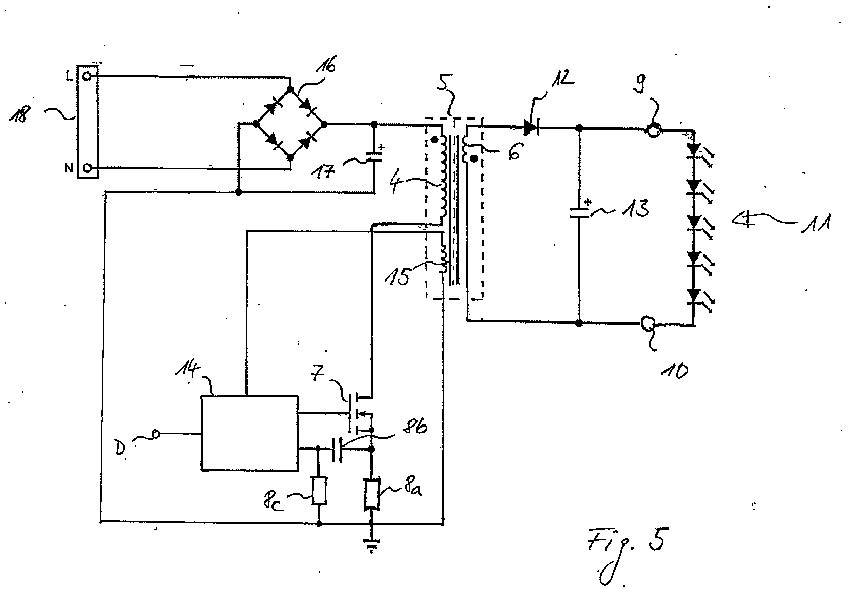

Fig. 5 zeigt ein Betriebsgerät für Leuchtdioden nach einem Ausführungsbeispiel gemäß der vorliegenden Erfindung. Das Betriebsgerät weist die in Fig. 5 gezeigte getaktete Sperrwandlerschaltung 3 und einen aus einer Diodenschaltung 16 und einem Ladekondensator 17 bestehenden Gleichrichter für die Gleichrichtung einer an den Eingangsanschluss 18 zugeführten Wechselspannung auf. Das Betriebsgerät kann eine zwischen der Diodenschaltung 16 und dem Ladekondensator 17 angeordnete (vorzugsweise aktiv getaktete) Leistungsfaktorkorrekturschaltung (nicht gezeigt) umfassen.

Die LEDs der an den Ausgangsanschlüssen 9, 10 angeschlossenen Leuchtmittel (LED-Strecke) 11 können anorganische oder organische LEDs sein. Die LEDs können in Serie oder parallel geschaltet sein. Die mehreren LEDs können auch in komplexeren Anordnungen verschaltet sein, beispielsweise in mehreren zueinander parallel geschalteten Reihenschaltungen. Während beispielhaft fünf LEDs dargestellt sind, kann das Leuchtmittel bzw. die LED-Strecke 11 auch mehr oder weniger LEDs aufweisen.

## Patentansprüche

1. Getaktete Sperrwandlerschaltung zum Betreiben eine oder mehrerer Leuchtmittel (11), aufweisend
einen steuerbaren Schalter (7),
einen Transformator (5) mit einer Primärwicklung (4), welche mit dem steuerbaren Schalter (7) gekoppelt ist, und einer Sekundärwicklung (6), an welche das Leuchtmittel (11) ankoppelbar ist,
eine Steuereinrichtung (14) zum Ansteuern des steuerbaren Schalters (7), und
Mittel (8a,...8c) zum Erfassen eines zeitlichen Mittelwerts des durch den Schalter (7) fließenden Stroms und zur Zuführung eines diesen Mittelwert wiedergebenden Signals an die Steuereinrichtung (14), wobei
die Steuereinrichtung (14) dazu ausgelegt ist, jeweils den Zeitpunkt des Aus- und Wiedereinschaltens des Schalters auf Grundlage dieses Signals zu bestimmen,
der Transformator (5) eine primärseitige Hilfswicklung (15), an der die Steuereinrichtung (14) zum Erfassen der von der Hilfswicklung (15) abgegebenen Spannung angekoppelt ist, aufweist, und
die Steuereinrichtung (14) dazu ausgelegt ist, die über das Leuchtmittel (11) abfallende Spannung U_{LED} aus der von der Hilfswicklung (15) erfassten Spannung abzuleiten, **dadurch gekennzeichnet, dass**
die Steuereinrichtung (14) dazu ausgelegt ist, zumindest einen Betriebszustand der Sperrwandlerschaltung (3) zu detektieren, eine in der Steuereinrichtung gespeicherte diesem Betriebszustand zugeordnete Verlustleistung Pₗₒₛₛ der Sperrwandlerschaltung zu ermitteln den durch das Leuchtmittel (11) fließenden Strom I_{LED} unter Berücksichtigung der ermittelten Verlustleistung Pₗₒₛₛ gemäß der Formel I_{LED} = (Uᵢₙ·Iᵢₙ-Pₗₒₛₛ) /U_{LED} zu ermitteln und den Zeitpunkt des Aus- und Wiedereinschaltens des Schalters auf Grundlage einer Abweichung des ermittelten Stroms I_{LED} von einem vorgegebenen Wert zu bestimmen, wobei
Uᵢₙ die an der Primärwicklung (4) anliegende Spannung ist,
Iᵢₙ der zeitliche Mittelwert des durch die Primärwicklung (4) fließenden und von dem Signal angezeigten Stroms ist, und
Pₗₒₛₛ die Verlustleistung der Sperrwandlerschaltung ist.

2. Getaktete Sperrwandlerschaltung nach Anspruch 1, wobei
der Steuereinrichtung (14) ein Dimmsignal (D) zuführbar ist und die Steuereinrichtung (14) dazu ausgelegt ist, den vorgegebenen Wert auf Grundlage des Dimmsignals (D) zu setzen.

3. Getaktete Sperrwandlerschaltung nach Anspruch 1 oder 2, wobei
das Mittel (8a..8c) zum Erfassen des zeitlichen Mittelwerts einen Kondensator (8c) aufweist, der von dem durch den Schalter (7) fließenden Strom geladen wird, und
das Signal eine von dem Kondensator abgegebene Spannung (U_{c}) ist.

4. Getaktete Sperrwandlerschaltung nach Anspruch 3, wobei
die Steuereinrichtung (14) dazu ausgelegt ist, den Strom Iᵢₙ aus der von dem Kondensator abgegebenen Spannung (U_{c}) mittels einem vorgegeben, die Relation zwischen dem Strom Iᵢₙ und der Spannung (U_{c}) anzeigenden Faktor α zu ermitteln.

5. Getaktete Sperrwandlerschaltung nach Anspruch 3 oder 4, wobei
das Mittel (8a..8c) zum Erfassen des zeitlichen Mittelwerts ein Tiefpassfilter ist.

6. Getaktete Sperrwandlerschaltung nach einem der Ansprüche 1 bis 5, wobei
das bzw. die Leuchtmittel (11) Leuchtdioden sind.

7. Getaktete Sperrwandlerschaltung nach einem der Ansprüche 1 bis 6, wobei
die Sperrwandlerschaltung (3) potentialgetrennt ausgeführt ist.

8. Betriebsgerät für Leuchtdioden, aufweisend eine getaktete Sperrwandlerschaltung (3) nach einem der Ansprüche 1 bis 7.

9. Verfahren zum Steuern einer einen Transformator (5) aufweisenden getakteten Sperrwandlerschaltung (3), bei der eine Primärwicklung (4) des Transformators mit einem steuerbaren Schalter (3) und eine Sekundärwicklung (2) des Transformators (5) mit einem oder mehreren Leuchtmitteln (11) gekoppelt ist, mit den Schritten:
Ansteuern des steuerbaren Schalters (7),
Erfassen eines zeitlichen Mittelwerts Iin des durch den Schalter (7) fließenden Stroms,
Erfassen einer von einer primärseitigen Hilfswicklung (15) des Transformators (5) abgegebenen Spannung,
Ableiten der an das Leuchtmittel (11) abgegebenen Spannung U_{LED} aus der von der Hilfswicklung (15) erfassten Spannung,
Ermitteln des durch das Leuchtmittel (11) fließenden Stroms I_{LED} basierend auf der Spannung U_{LED} und dem Strom Iᵢₙ, und jeweiliges Bestimmen eines Zeitpunkts für das Aus- und Wiedereinschalten des Schalters (7) auf Grundlage einer Abweichung des ermittelten Stroms I_{LED} von einem vorgegebenen Wert,
**gekennzeichnet durch**
Detektieren von zumindest einem Betriebszustand der Sperrwandlerschaltung (3), und
Ermitteln einer gespeicherten diesem Betriebszustand zugeordneten Verlustleistung Pₗₒₛₛ, wobei
der Strom I_{LED} auf Grundlage der ermittelten Verlustleistung Pₗₒₛₛ gemäß der Formel I_{LED} = (Uᵢₙ·Iᵢₙ-Pₗₒₛₛ) /U_{LED} bestimmt wird, wobei
Uᵢₙ die an der Primärwicklung (4) anliegende Spannung ist,
Iᵢₙ der zeitliche Mittelwert des durch die Primärwicklung (4) fließenden und von dem Signal angezeigten Stroms ist, und
Pₗₒₛₛ die Verlustleistung der Sperrwandlerschaltung ist.

## Claims

1. Clocked flyback converter circuit for operating one or more illuminants (11), comprising:
a controllable switch (7),
a transformer (5) having a primary winding (4) coupled to the controllable switch (7) and a secondary winding (6) to which the illuminant (11) can be coupled,
a control device (14) for controlling the controllable switch (7), and
means (8a, ..., 8c) for detecting a temporal mean value of the current flowing through the switch (7) and for supplying a signal representing this mean value to the control device (14), wherein
the control device (14) is designed to determine, on the basis of this signal, the respective time at which the switch is switched off and back on again,
the transformer (5) has a primary-side auxiliary winding (15), to which is coupled the control device (14) for detecting the voltage emitted by the auxiliary winding (15), and
the control device (14) is designed to derive the voltage U_{LED} dropping across the illuminant (11) from the voltage detected by the auxiliary winding (15), **characterized in that**
the control device (14) is designed to detect at least one operating state of the flyback converter circuit (3); to determine a power loss Pₗₒₛₛ of the flyback converter circuit associated with this operating state and stored in the control device; to determine the current I_{LED} flowing through the illuminant (11), taking into account the determined power loss Pₗₒₛₛ according to the formula
I_{LED} = (Uᵢₙ·Iᵢₙ-Pₗₒₛₛ)/U_{LED}; and to determine the point in time at which the switch is switched off and back on again, on the basis of a deviation of the determined current I_{LED} from a prespecified value, wherein
Uᵢₙ is the voltage applied to the primary winding (4),
Iᵢₙ is the temporal mean value of the current flowing through the primary winding (4) and indicated by the signal, and
Pₗₒₛₛ is the power loss of the flyback converter circuit.

2. Clocked flyback converter circuit according to Claim 1, wherein
a dimming signal (D) can be supplied to the control device (14), and the control device (14) is designed to set the prespecified value on the basis of the dimming signal (D).

3. Clocked flyback converter circuit according to Claim 1 or 2, wherein
the means (8a, ..., 8c) for detecting the temporal mean value comprises a capacitor (8c) which is charged by the current flowing through the switch (7), and
the signal is a voltage (U_{c}) output by the capacitor.

4. Clocked flyback converter circuit according to Claim 3, wherein
the control device (14) is designed to determine the current Iᵢₙ from the voltage output by the capacitor (U_{c}) by means of a prespecified factor α indicating the ratio between the current Iᵢₙ and the voltage (U_{c}).

5. Clocked flyback converter circuit according to Claim 3 or 4, wherein
the means (8a, ..., 8c) for detecting the temporal mean value is a low-pass filter.

6. Clocked flyback converter circuit according to one of Claims 1 to 5, wherein
the illuminant or illuminants (11) are light-emitting diodes.

7. Clocked flyback converter circuit according to one of Claims 1 to 6, wherein
the flyback converter circuit (3) is designed to be electrically isolated.

8. Operating device for light-emitting diodes, comprising a clocked flyback converter circuit (3) according to one of Claims 1 to 7.

9. Method for controlling a clocked flyback converter circuit (3) having a transformer (5), in which a primary winding (4) of the transformer is coupled to a controllable switch (3) and a secondary winding (2) of the transformer (5) is coupled to one or more illuminants (11), comprising the steps:
controlling the controllable switch (7),
detecting a temporal mean value Iᵢₙ of the current flowing through the switch (7),
detecting a voltage output from a primary-side auxiliary winding (15) of the transformer (5),
deriving the voltage U_{LED} output to the illuminant (11) from the voltage detected by the auxiliary winding (15),
determining the current I_{LED} flowing through the illuminant (11) on the basis of the voltage U_{LED} and the current Iᵢₙ, and
respectively determining a point in time at which the switch (7) is switched off and back on again, on the basis of a deviation of the determined current I_{LED} from a prespecified value, **characterized by**
detecting at least one operating state of the flyback converter circuit (3), and
determining a stored power loss Pₗₒₛₛ associated with this operating state, wherein
the current I_{LED} is determined on the basis of the determined power loss Pₗₒₛₛ according to the formula I_{LED} = (Uᵢₙ·Iᵢₙ-Pₗₒₛₛ)/U_{LED}, wherein
Uᵢₙ is the voltage applied to the primary winding (4),
Iᵢₙ is the temporal mean value of the current flowing through the primary winding (4) and indicated by the signal, and
Pₗₒₛₛ is the power loss of the flyback converter circuit.

## Revendications

1. Circuit convertisseur flyback cadencé pour faire fonctionner une ou plusieurs sources lumineuses (11), présentant
un commutateur commandable (7),
un transformateur (5) comprenant un enroulement primaire (4), lequel est couplé au commutateur commandable (7) et un enroulement secondaire (6), auquel la source lumineuse (11) peut être couplée,
un dispositif de commande (14) pour la commande du commutateur commandable (7) et des moyens (8a,...8c) pour la détection d'une moyenne temporelle du courant traversant le commutateur (7) et pour la fourniture d'un signal représentant cette moyenne au dispositif de commande (14),
le dispositif de commande (14) étant conçu pour déterminer respectivement le moment d'éteindre et de rallumer le commutateur sur la base de ce signal,
le transformateur (5) présentant un enroulement auxiliaire côté primaire (15), auquel le dispositif de commande (14) est couplé pour la détection de la tension générée par l'enroulement auxiliaire (15) et
le dispositif de commande (14) étant conçu pour dériver la tension appliquée sur la source lumineuse (11) U_{LED} de la tension détectée par l'enroulement auxiliaire (15), **caractérisé en ce que**
le dispositif de commande (14) est conçu pour détecter au moins un état de fonctionnement du circuit convertisseur flyback (3), déterminer une perte de puissance Pₗₒₛₛ du circuit convertisseur flyback associée à cet état de fonctionnement et enregistrée dans le dispositif de commande, déterminer le courant I_{LED} traversant la source lumineuse (11) en tenant compte de la perte de puissance Pₗₒₛₛ déterminée, conformément à la formule I_{LED} = (Uᵢₙ·Iᵢₙ-Pₗₒₛₛ)/U_{LED} et déterminer le moment d'éteindre et de rallumer le commutateur sur la base d'un écart du courant I_{LED} déterminé d'une valeur prédéfinie,
Uᵢₙ étant la tension appliquée à l'enroulement primaire (4),
Iᵢₙ étant la moyenne temporelle du courant traversant l'enroulement primaire (4) et représenté par le signal et
Pₗₒₛₛ étant la perte de puissance du circuit convertisseur flyback.

2. Circuit convertisseur flyback cadencé selon la revendication 1, dans lequel
un signal d'atténuation (D) peut être amené au dispositif de commande (14) et le dispositif de commande (14) est conçu pour définir la valeur prédéfinie sur la base du signal d'atténuation (D).

3. Circuit convertisseur flyback cadencé selon la revendication 1 ou 2, dans lequel
les moyens (8a..8c) pour la détection de la moyenne temporelle présentent un condensateur (8c) qui est chargé par le courant traversant le commutateur (7) et
le signal est une tension (U_{c}) générée par le condensateur.

4. Circuit convertisseur flyback cadencé selon la revendication 3, dans lequel
le dispositif de commande (14) est conçu pour déterminer le courant Iᵢₙ à partir de la tension (U_{c}) générée par le condensateur au moyen d'un facteur α prédéfini indiquant la relation entre le courant Iᵢₙ et la tension (U_{c}).

5. Circuit convertisseur flyback cadencé selon la revendication 3 ou 4, dans lequel
les moyens (8a..8c) pour la détection de la moyenne temporelle sont un filtre passe-bas.

6. Circuit convertisseur flyback cadencé selon l'une quelconque des revendications 1 à 5, dans lequel
la ou les sources lumineuses (11) sont des diodes électroluminescentes.

7. Circuit convertisseur flyback cadencé selon l'une quelconque des revendications 1 à 6, dans lequel
le circuit convertisseur flyback (3) est réalisé avec séparation de potentiel.

8. Dispositif de fonctionnement pour des diodes électroluminescentes, comprenant un circuit convertisseur flyback cadencé (3) selon l'une quelconque des revendications 1 à 7.

9. Procédé de commande d'un circuit convertisseur flyback cadencé (3) présentant un transformateur (5), dans lequel un enroulement primaire (4) du transformateur est couplé à un commutateur commandable (3) et un enroulement secondaire (2) du transformateur (5) est couplé à une ou plusieurs sources lumineuses (11), comprenant les étapes de :
commande du commutateur commandable (7),
détection d'une moyenne temporelle Iᵢₙ du courant traversant le commutateur (7),
détection d'une tension générée par un enroulement auxiliaire côté primaire (15) du transformateur (5),
dérivation de la tension U_{LED} générée au niveau de la source lumineuse (11) à partir de la tension détectée par l'enroulement auxiliaire (15),
détermination du courant I_{LED} traversant la source lumineuse (11) sur la base de la tension U_{LED} et du courant Iᵢₙ et
détermination respective d'un moment pour éteindre et rallumer le commutateur (7) sur la base d'un écart du courant déterminé I_{LED} d'une valeur prédéfinie,
**caractérisé par**
la détection d'au moins un état de fonctionnement du circuit convertisseur flyback (3) et
la détermination d'une perte de puissance Pₗₒₛₛ enregistrée associée à cet état de fonctionnement,
le courant I_{LED} étant déterminé sur la base de la perte de puissance Pₗₒₛₛ déterminée, conformément à la formule I_{LED} = (Uᵢₙ·Iᵢₙ-Pₗₒₛₛ)/U_{LED}
Uᵢₙ étant la tension appliquée à l'enroulement primaire (4),
Iᵢₙ étant la moyenne temporelle du courant traversant l'enroulement primaire (4) et représenté par le signal et
Pₗₒₛₛ étant la perte de puissance du circuit convertisseur flyback.
